# FASCICULE DE BREVET EUROPEEN

(11) **EP 3 628 911 B1**
(45) Date de publication et mention de la délivrance du brevet: **31.03.2021**
(21) Numéro de dépôt: 19186415.6
(22) Date de dépôt: 16.07.2019
(51) Int. Cl.: F17C 5/06

(54) **DISPOSITIF ET PROCÉDÉ DE REMPLISSAGE DE RÉSERVOIRS DE GAZ SOUS PRESSION**
FÜLLVORRICHTUNG UND -VERFAHREN FÜR DRUCKGASTANKS
DEVICE AND METHOD FOR FILLING PRESSURISED GAS TANKS

(30) Priorité: 25.09.2018 FR 1858700
(43) Date de publication de la demande: 01.04.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: CRISPEL, Simon, 38360 Sassenage (FR); BUCK, Marcus, 75007 Paris (FR); THIEU, Anh Thao, 75007 Paris (FR); FAIRY, Vincent, 75007 Paris (FR)
(74) Mandataire: Air Liquide

(56) Documents cités:
- WO-A1-2008/062117
- DE-A1-102016 009 672
- FR-A1- 3 034 836
- US-A- 5 771 946

## Description

L'invention concerne un dispositif de remplissage de réservoirs de gaz sous pression.

L'invention concerne plus particulièrement un dispositif de remplissage de réservoirs de gaz sous pression, notamment de réservoirs d'hydrogène sous pression de véhicules, le dispositif comprenant une source de gaz liquéfié, un circuit de transfert comprenant deux lignes de transfert parallèles ayant chacune une extrémité amont reliée à la source de gaz liquéfié, chaque ligne de transfert comprenant une extrémité aval destinée à être raccordée de façon amovible avec un réservoir à remplir.

Les stations de ravitaillement d'hydrogène gazeux utilisant des sources d'hydrogène liquide sont connues.

DE102016009672 A1 divulgue une station de ravitaillement. Ces dispositifs connus permettent d'utiliser le froid de l'hydrogène liquide pour produire un gaz sous pression pré-refroidi en vue d'un remplissage rapide sans élévation excessive de la température du gaz dans le réservoir au cours du remplissage.

Cf. par exemple US5934081 ou l'article « A rapid fill hydrogen fuel station for fuel cell buses » de V Raman D. Farese et J Hansel (12th World Energy conference Hydrogen energy Progress 2 p.1629-1642). Cf. également l'article « Hydrogen vehicle fueling station » de D.E. Daney, and al (Advances in Cryogenic Engineering Vol. 41, 1996).

Ces agencements connus ne permettent pas de garantir des performances satisfaisantes de l'installation ni sa modularité.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que chacune des deux lignes de transfert comprend : une pompe, un organe de vaporisation du fluide pompé, une branche de dérivation de l'organe de vaporisation et un ensemble de vanne(s) de répartition configuré pour contrôler le flux de fluide pompé et réparti entre l'organe de vaporisation et la branche de dérivation, le dispositif comprenant en outre un ensemble de stockage(s) tampon raccordé(s) en parallèle à chacune des deux lignes de transfert via un ensemble de vanne(s).

Par ailleurs, des modes de réalisation de l'invention peuvent comporter l'une ou plusieurs des caractéristiques suivantes :
- l'ensemble de stockage(s) tampon est raccordé à chaque ligne de transfert entre l'organe de vaporisation et le point de mélange entre le fluide ayant transité par l'organe de vaporisation et le fluide ayant transité par la branche de dérivation,
- l'ensemble de stockage(s) tampon est raccordé à chaque ligne de transfert via une vanne de détente respective,
- l'ensemble de vanne(s) de répartition de chaque ligne de transfert comprend une première vanne de répartition située en aval de l'organe de vaporisation et en amont du point de mélange avec le fluide passé par la branche de dérivation, l'ensemble de vanne(s) de répartition comprenant seconde vanne de répartition dans la branche de dérivation,
- l'ensemble de stockage(s) tampon comprend deux ou plus de deux stockages tampon raccordés en parallèle à chaque ligne de transfert, chaque stockage tampon étant raccordé à chaque ligne de transfert via une vanne d'isolation respective,
- le circuit de transfert comprend une conduite de raccordement reliant les deux lignes de transfert au niveau des sorties des deux pompes, ladite conduite de raccordement comprenant une vanne d'isolation,
- les deux lignes de transfert comprennent au moins une portion isolée thermiquement,
- les deux lignes de transfert comprennent au moins un capteur de pression et/ou au moins un capteur de température mesurant la pression, respectivement la température, notamment à proximité de l'extrémité aval,
- pendant au moins une partie du remplissage, notamment lorsque le débit de gaz déterminé est inférieur ou égal au débit maximal de la pompe, le débit de gaz transféré dans le réservoir est constitué uniquement du débit de gaz fourni par la pompe et réparti entre l'organe de vaporisation et la une branche de dérivation,
- le débit déterminé pour remplir le réservoir varie entre zéro et 100g/seconde et notamment entre 10 et 60g/seconde,
- la pompe est une pompe à vitesse variable et en ce que le débit de gaz transféré dans le réservoir au cours du remplissage est contrôlé en contrôlant la vitesse de la pompe et éventuellement la quantité de gaz fourni par l'ensemble de stockage(s) tampon,
- la température du gaz sous pression transférée dans le réservoir au cours du remplissage est contrôlée en pilotant la répartition relative entre le gaz relativement chaud passant par l'organe de vaporisation et le gaz relativement froid passant par la branche de dérivation et éventuellement la quantité de gaz relativement chaud provenant de l'ensemble de stockage(s) tampon,
- le débit de gaz additionnel fourni par l'ensemble de stockage(s) tampon est contrôlé en réponse à un signal de pression mesuré au niveau de l'extrémité aval de la ligne de transfert,
- l'ensemble de stockage(s) tampon comprend plusieurs stockages tampon raccordés en parallèle à chaque ligne de transfert et utilisés successivement selon un processus de cascade pour fournir du gaz à la ligne ou les lignes de transfert.

L'invention concerne également un procédé de remplissage d'au moins un réservoir de gaz sous pression avec un débit de gaz déterminé à une température déterminée pour établir une rampe de remplissage déterminée dans le réservoir, dans lequel le procédé utilise un dispositif de remplissage conforme à l'une quelconque des caractéristiques ci-dessus ou ci-après.

Selon d'autres particularités possibles :
- le débit de gaz est variable et modifié au cours du temps,
- pendant au moins une partie du remplissage, notamment lorsque le débit de gaz déterminé est supérieur au débit maximal de la pompe, le débit de gaz transféré dans le réservoir est la somme d'une part du débit de gaz fourni par la pompe et réparti entre l'organe de vaporisation et la une branche de dérivation, et, d'autre part, d'un débit de gaz additionnel fourni par l'ensemble de stockage(s) tampon,
- le procédé comporte une étape de remplissage d'un réservoir avec un flux de gaz comprenant la somme des flux de gaz fournis par les pompes de deux lignes de transfert via le transfert d'un flux de gaz d'une ligne de transfert dans l'autre ligne de transfert,
- le procédé comprend, préalablement ou au début du remplissage d'un réservoir, une étape de refroidissement de ladite ligne de transfert comprenant un transfert de gaz à une température déterminée contrôlée en pilotant la répartition relative entre le gaz relativement chaud passant par l'organe de vaporisation et le gaz relativement froid passant par la branche de dérivation et éventuellement la quantité de gaz relativement chaud provenant de l'ensemble de stockage(s) tampon,
- l'étape de refroidissement de ladite ligne de transfert est réalisée en contrôlant l'ouverture des vannes de répartition entre l'organe de vaporisation et la branche de dérivation et d'un éventuel débit de gaz additionnel fourni par l'ensemble de stockage(s) tampon selon un contrôle de type « boucle ouverte (« feedforward ») et/ou selon une boucle de contrôle basée sur une température mesurée au niveau de la ligne de transfert,
- l'étape de refroidissement de ladite ligne de transfert comprend une étape de purge vers l'extérieur ou vers un organe de récupération du gaz transféré à une température déterminée contrôlée dans la ligne de transfert à refroidir.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
- la figure 1 représente une vue schématique et partielle illustrant un exemple de structure et de fonctionnement d'un exemple de dispositif selon l'invention,
- la figure 2 représente un graphique de l'évolution de paramètres selon un exemple possible de remplissage selon l'invention.

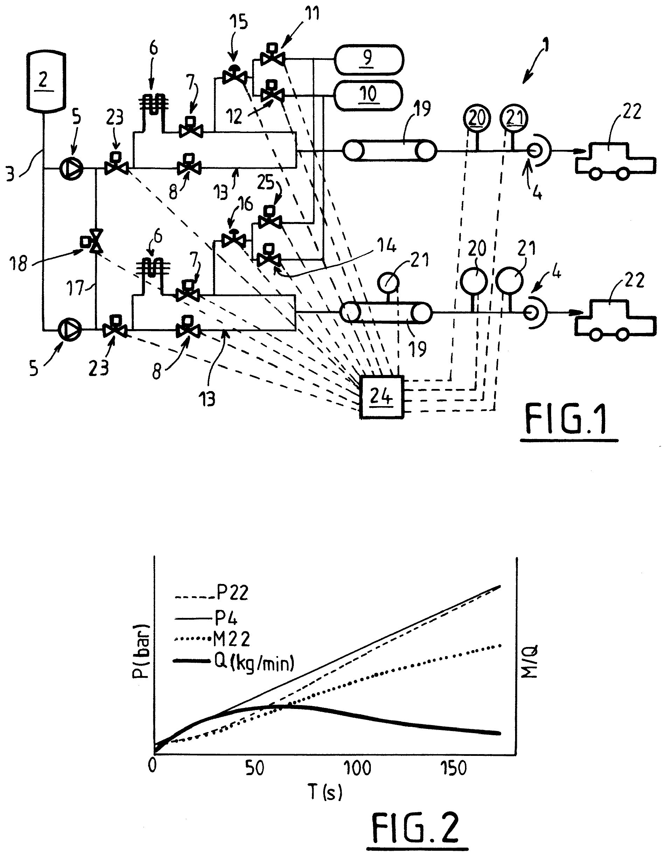

Le dispositif 1 de remplissage de réservoirs de gaz sous pression (notamment de réservoirs d'hydrogène sous pression de véhicules) représenté à la figure 1 comprend une source 2 de gaz liquéfié. La source de gaz liquéfié comprend par exemple au moins un stockage de gaz liquéfié isolé sous vide et/ou une source de gaz liquide (un liquéfacteur ou tout autre dispositif approprié).

A noter que, dans le cas où le gaz est de l'hydrogène (H2), on désignera par soucis de simplification l'état du fluide par termes « gaz » ou « liquide » utilisés usuellement cependant, selon la pression du fluide ce dernier sera en fait un fluide supercritique.

Le dispositif 1 comprend un circuit 3 de transfert comprenant deux lignes de transfert de fluide parallèles ayant chacune une extrémité amont 3 reliée à la source 2 de gaz liquéfié pour y prélever du gaz liquéfié. Chaque ligne de transfert possède une extrémité aval 4 respective destinée à être raccordée chacune de façon amovible avec un réservoir 22 à remplir (par exemple via une portion flexible munie d'un raccord rapide et de clapet(s) appropriés le cas échéant).

A noter que l'exemple de la figure 1 possède deux lignes de transfert mais pourrait en posséder plus que deux.

Chacune des deux lignes de transfert comprend une pompe 5, un organe 6 de vaporisation du fluide pompé et une branche 13 de dérivation sélective de l'organe 6 de vaporisation.

De plus les lignes comprennent chacune un ensemble de vanne(s) 7, 8 de répartition configuré pour contrôler le flux de fluide pompé et réparti entre l'organe 6 de vaporisation (où le liquide est réchauffé et vaporisé et donc relativement plus chaud et à pression relativement élevée) et la branche 13 de dérivation (où le liquide est sensiblement aux conditions thermodynamiques de sa sortie de la pompe 5 ; donc relativement froid).

En aval de l'organe 6 de vaporisation les deux portions parallèles se rejoignent en un point de mélange des deux fluides relativement chaud et froid.

L'ensemble de vannes 7, 8 de répartition de chaque ligne de transfert comprend par exemple une première vanne 7 de répartition située de préférence en aval de l'organe 6 de vaporisation et en amont du point de mélange avec le fluide passé par la branche 13 de dérivation L'ensemble de vannes 7, 8 de répartition peut comprendre en outre une seconde vanne 8 de répartition dans la branche 13 de dérivation (en amont du point de mélange).

Bien entendu, tout autre système de répartition pourrait être envisagé notamment un système à vannes à trois voies.

Les vannes 7 de répartition étant situées en aval de l'organe 6 de réchauffage et en amont du point de mélange, ceci permet l'utilisation de vannes travaillant à température ambiante (non cryogénique) et qui gèrent un débit relativement faible. Ceci augmente la fiabilité de l'installation et limite son coût.

Le circuit comprend de préférence également, dans chaque ligne de transfert, une vanne amont 23 située entre la sortie de la pompe 5 et avant les branches de vaporisation et de dérivation.

Classiquement, la température du fluide à la sortie du pistolet de remplissage (extrémité 4) peut ainsi être contrôlée via ce mélange, pour être maintenue par exemple à une température déterminée notamment entre -33°C et -40°C.

Ceci permet d'obtenir un flux de gaz à une pression et une température déterminées prévus pour assurer un remplissage du réservoir 22 en limitant l'échauffement dans ce dernier.

L'organe 6 de vaporisation est par exemple un échangeur de chaleur réchauffeur assurant un échange thermique de l'hydrogène liquide avec une source de chaleur (de l'air ou tout autre élément de réchauffage).

Le dispositif 1 comprenant en outre un ou plusieurs stockage(s) tampon 9, 10 de gaz sous pression raccordé(s) en parallèle à chacune des deux lignes de transfert via un ensemble de vanne(s) 11 à 16 respectives.

Cette architecture qui prévoit une pompe 5 pour chaque ligne transfert (pour chaque ligne de remplissage d'un réservoir 22) présente de nombreux avantages par rapport aux systèmes connus. Ceci permet une bonne modularité de la station (plusieurs remplissages simultanés possibles, possibilité d'ajouter ou de retire une ligne de transfert sans affecter les performances des autres lignes...) .

De plus, cette solution améliore les performances du dispositif. En effet, selon cette agencement, les pompes 5 de chacune des lignes de transfert présentent ainsi un meilleur rendement volumétrique et énergétique à basse pression notamment.

En effet, le fait de dédier une pompe 5 par ligne de transfert (« dispenser » en anglais) permet de fournir l'hydrogène à la pression requise par le réservoir 22 à remplir en limitant les pertes de performances, l'usure de la pompe 5 et les pertes par détente Joule-Thomson.

Chaque pompe 5 peut ainsi être pleinement utilisée dans zone d'utilisation offrant son meilleur rendement énergétique et volumétrique à relativement basse pression entre 200 bar à 900 bar (au lieu de l'intervalle entre 700 et 900 bar au cas où une seule pompe est connectée directement aux stockages tampons et utilisée pour plusieurs lignes de transfert). Un tel fonctionnement à basse pression permis par l'invention permet de réduire jusqu'à 50% la consommation énergétique de la pompe.

Comme illustré à la figure 1, les stockages tampon 9, 10 sont de préférence raccordé à chaque ligne de transfert entre l'organe 6 de vaporisation et le point de mélange entre le fluide ayant transité par l'organe 6 de vaporisation et le fluide ayant transité par la branche 13 de dérivation.

Par exemple, les stockages tampon 9, 10 peuvent être raccordés en parallèle à chaque ligne de transfert via une vanne 15, 16 de détente respective. De plus, chaque stockage tampon 9, 10 peut comprendre une vanne d'isolation respective 11, 12 situé entre l'entrée/sortie du stockage 9, 10 et chaque vanne 15, 16 de détente.

Ces vannes 11, 12, 25, 14 d'isolement des stockages séparées pour chaque ligne de transfert dispenser permettent de mutualiser les stockages tampon tout en gardant l'indépendance des lignes de transfert.

Comme représenté à la figure 1, le circuit 3 de transfert peut comprendre avantageusement au moins une conduite 17 de raccordement reliant deux lignes de transfert (ou plus) au niveau des sorties des pompes 5. La conduite 17 de raccordement comprend par exemple une vanne 18 d'isolation. Cette conduite 17 de raccordement et sa vanne 18 permettent le cas échéant une mutualisation (addition) des flux pompés en cas de besoin (par exemple dans le cas du remplissage de réservoirs de grande taille et/ou en cas de panne d'une pompe).

Comme schématisé à la figure 1, au moins une portion 19 de chaque ligne de transfert peut être isolée thermiquement (pas forcément sous vide et/ou refroidie). De plus, chaque ligne peut comprendre au moins un capteur 20 de pression et/ou au moins un capteur 21 de température mesurant la pression/la température en sein, notamment à proximité de l'extrémité aval de raccordement à un réservoir 22.

Tout ou partie des vannes peuvent être des vannes pilotées, par exemple par un contrôleur 24 électronique comprenant un microprocesseur et/ou un ordinateur muni d'un système d'acquisition, de stockage et de traitement de données. Le contrôleur 24 peut être reliée aux capteurs et différents autres organes du dispositif (pompes 5 notamment) pour l'acquisition de données, le contrôle et le pilotage de ces organes.

Comme illustré à la figure 2 à titre d'exemple non limitatif, le remplissage d'un réservoir est réalisé de préférence selon une rampe de remplissage (pré)définie. Par exemple, la pompe 5 et l'ensemble de vannes est piloté pour assurer une vitesse de montée en pression déterminée dans le réservoir (P22= pression dans le réservoir), par exemple essentiellement linéaire. Par exemple, la pression P4 mesurée dans la conduite 4 de transfert (et représentative de la pression P22 dans le réservoir 22) est contrôlée pour être croissante linéairement au cours du temps. Ceci peut être est obtenu en contrôlant la masse M22 dans le réservoir 22 au cours du temps T et donc le débit Q de gaz transféré au cours du temps. Ce débit est défini selon les conditions de remplissage (quantité, volume du réservoir, température...).

Le transfert du débit de gaz requis peut être fourni par la pompe 5 et éventuellement suppléé par un débit de gaz additionnel fourni par le ou les stockages tampon 9, 10.

Dans un cas de remplissage nominal, un réservoir doit être rempli par exemple avec 5 à 7kg d'hydrogène à une température ambiante de 15°C en quelques minutes (trois minutes par exemple) selon une rampe de remplissage définie par un protocole de remplissage.

Par exemple, au début du remplissage, seule la pompe 5 peut suffire pour fournir le débit nécessaire pour remplir le véhicule. Selon la rampe de pression, ce débit augmente de zéro du début du remplissage jusqu'au débit maximal de la pompe.

La rampe de pression est pilotée (obtenue) par exemple en modulant la vitesse de la pompe 5. La pression fournie par la pompe 5 est la pression demandée au niveau de l'extrémité de la ligne de transfert par le réservoir 22 à remplir. Cette pression peut être typiquement de l'ordre de 50 à 300 bar en fonction de la pression initiale du réservoir 22.

L'hydrogène qui transite via l'organe 6 de vaporisation réchauffé, tandis que la branche 13 de dérivation permet d'acheminer de l'hydrogène cryogénique à sa température de sortie de pompe 5.

L'ouverture des deux vannes 7, 8 peut être pilotée pour atteindre la distribution adéquate afin d'atteindre une température de gaz cible au niveau de l'extrémité aval 4.

Si la ligne est trop chaude (température mesuré 21 au-dessus d'une température cible), la vanne 7 côté « chaud » peut être fermée notamment complètement et la vanne 8 côté « froid » ouverte par exemple complètement pour laisse passer 100% le débit froid pour refroidir la ligne.

Si la ligne est froide, le ratio débit froid/débit chaud peut être régulé par les vannes 7, 8 par exemple entre 30% et 50% en fonction de la performance de la pompe 5 et/ou de la température ambiante.

Au fur et à mesure que le réservoir 22 se remplit, le débit de remplissage peut augmenter et peut notamment dépasser la capacité de la pompe 5.

Le contrôleur peut détecter 20 un manque de pression au niveau de la ligne par rapport à une pression cible et pour y remédier peut ouvrir la ou les vannes 11, 15 des stockages tampon.

C'est-à-dire que le contrôle du débit de la pompe et le débit fourni par les stockages tampon peuvent être contrôlés pour assurer une consigne de pression mesurée dans la ligne de transfert (notamment à l'extrémité aval).

Dans cette configuration le pompe 5 est peut être à son débit maximal (vitesse maximale), et la rampe de pression est pilotée par la vanne 15 de détente.

La pression fournie par la pompe 5 (comme la pression au niveau de la ligne de transfert) augmente jusqu'à la pression de fin de remplissage (par exemple 700 à 850 bar). Le cas échéant les stockages 9, 10 peuvent être utilisés en cascade (les vannes 11, 12 ; 25, 14 associées aux stockages permettant le basculement d'un stockage à l'autre).

L'hydrogène fourni par les stockages tampon 9, 10 rejoint le débit issu de la pompe 5 après avoir été détendu dans la vanne 15, 16 correspondante. Les vannes 7, 8 assurent toujours le contrôle de la température du gaz fourni.

Le débit fourni dans cette seconde phase de remplissage est plus important, par exemple de l'ordre de 25-45 g/s avec un pic pouvant atteindre 60g/s par exemple.

Avec le débit de gaz chaud fourni par le ou les stockages 9, 10 tampon aussi variable et important, le ratio entre le gaz froid et le gaz chaud que fournit la pompe 5 est plus important que lors du début du remplissage. Ce ratio peut varier par exemple entre 30% et 100% selon le débit total de remplissage.

Lorsque le remplissage est fini, la pompe 5 peut être utilisée pour remplir le ou les stockages 9, 10 jusqu'à leur pression nominale. Tout l'hydrogène pompé peut être réchauffé à la pression de stockage (400-500 bar pour un stockage tampon à moyenne pression et 700-1000 bar pour au stockage tampon à haute pression).

Dans certains cas le remplissage ne nécessite qu'un faible débit, suffisamment faible pour être fourni totalement par la pompe 5 (réservoirs de petite tailles avec une capacité inférieure à 4 kg d'hydrogène par exemple). Un remplissage à faible débit peut aussi être prévu lorsque la température ambiante est (très) élevée, par exemple au-dessus de 30 ou 40°C.

Dans ce cas, la vanne 15, 16 de détente peut rester fermée au cours du remplissage. La rampe de pression peut être complètement pilotée par la vitesse de la pompe 5. Le ratio débit froid/débit chaud est régulé par les vannes 7, 8 correspondantes et être varier par exemple entre 30% et 50% sauf pour le refroidissement des lignes comme décrit précédemment.

Dans le cas d'un débit important nécessaire pour le remplissage de réservoirs 22 de grande taille (tels que des réservoirs de bus stockant plus de 10kg d'hydrogène), le débit requis et la puissance de refroidissement nécessaire sont relativement importants. Un tel remplissage rapide est toujours possible en fournissant un grand débit de remplissage au niveau d'une ligne de transfert. Ceci peut être réalisé en utilisant deux pompes 5 et contrôlant les vannes appropriées et notamment en ouvrant la vanne 18 de la conduite 17 de raccordement.

Cette disposition permet donc de doubler la capacité d'une ligne de transfert et de conférer une souplesse d'utilisation à la station 1.

Comme évoqué ci-dessus, l'agencement permet également un refroidissement efficace des lignes de transfert.

En effet, après un temps de veille prolongé, la ou les lignes de transfert peuvent se réchauffer. Le refroidissement peut poser des problèmes sur les stations de l'art antérieur.

Selon l'architecture proposée, les lignes de transfert peuvent être refroidies aisément de plusieurs façons.

Par exemple, la ligne peut être refroidi selon un refroidissement dit « direct » avec le fluide froid transféré dans le réservoir 22 en tout début de remplissage. En effet, en début de remplissage, il peut exister une fenêtre temporelle de tolérance (souvent de l'ordre de 30 secondes) pendant laquelle le réservoir 22 peut être rempli par un gaz pas suffisamment refroidi (au-dessus de la température cible). Si la ligne de transfert est suffisamment courte (par exemple inférieure à trente ou vingt mètres), l'hydrogène cryogénique à la sortie de la pompe 5 peut être envoyé directement dans le réservoir 22 après avoir refroidi la ligne pendant la fenêtre de tolérance.

Le contrôle de température de la température de la ligne peut être réalisé par une correction du type boucle ouverte (« feedforward ») ou « en cascade » en fonction de la température mesurée 21 de la ligne (par exemple la température du gaz dans la ligne). C'est-à-dire que les consignes d'ouverture des vannes 7, 8 notamment sont asservies ou forcées à la valeur de la température mesurée en aval.

Selon un autre mode de refroidissement possible (dit de « purge froide »), la ligne peut être refroidie par un flux de gaz froid dédié qui n'est pas utilisé pour remplir le réservoir 22.

En effet, pour les lignes de transfert plus longues, le « refroidissement direct » peut s'avérer insuffisant. Il peut être alors envisagé d'ajouter une ligne de purge. Ainsi, avant le remplissage du réservoir 22, la ligne peut être purgée par de l'hydrogène froid fourni par la pompe 5 et renvoyé à un stockage 9, 10 tampon par une ligne de purge (non représentée par soucis de simplification).

Cette phase de purge peut être réalisée dès que le réservoir est raccordé à l'extrémité aval de la ligne de transfert et pendant que l'utilisateur manipule une interface avant le remplissage effectif. Ceci peut même être réalisé en amont par une détection de l'arrivée d'un client/utilisateur/véhicule. Cette phase de purge peut nécessiter quelques dizaines de secondes en fonction de la longueur des lignes et de la température ambiante.

## Revendications

1. Dispositif de remplissage de réservoirs de gaz sous pression, notamment de réservoirs d'hydrogène sous pression de véhicules, le dispositif comprenant une source (2) de gaz liquéfié, un circuit (3) de transfert comprenant deux lignes de transfert parallèles ayant chacune une extrémité amont (3) reliée à la source (2) de gaz liquéfié, chaque ligne de transfert comprenant une extrémité aval (4) destinée à être raccordée de façon amovible avec un réservoir (22) à remplir, chacune des deux lignes de transfert comprenant : une pompe (5), un organe (6) de vaporisation du fluide pompé, une branche (13) de dérivation de l'organe (6) de vaporisation et un ensemble de vanne(s) (7, 8) de répartition configuré pour contrôler le flux de fluide pompé et réparti entre l'organe (6) de vaporisation et la branche (13) de dérivation, le dispositif (1) comprenant en outre un ensemble de stockage(s) tampon (9, 10) raccordé(s) en parallèle à chacune des deux lignes de transfert via un ensemble de vanne(s) (11 à 16).

2. Dispositif selon la revendication 1, **caractérisé en ce que** l'ensemble de stockage(s) tampon (9, 10) est raccordé à chaque ligne de transfert entre l'organe (6) de vaporisation et le point de mélange entre le fluide ayant transité par l'organe (6) de vaporisation et le fluide ayant transité par la branche (13) de dérivation.

3. Dispositif selon la revendication 1 ou 2, **caractérisé en ce que** l'ensemble de stockage(s) tampon (9, 10) est raccordé à chaque ligne de transfert via une vanne (15, 16) de détente respective.

4. Dispositif selon l'une quelconque des revendications 1 à 3, **caractérisé en ce que** l'ensemble de vanne(s) (7, 8) de répartition de chaque ligne de transfert comprend une première vanne (7) de répartition située en aval de l'organe (6) de vaporisation et en amont du point de mélange avec le fluide passé par la branche (13) de dérivation, l'ensemble de vanne(s) (7, 8) de répartition comprenant seconde vanne (8) de répartition dans la branche (13) de dérivation.

5. Dispositif selon l'une quelconque des revendications 1 à 4, **caractérisé en ce que** l'ensemble de stockage(s) tampon (9, 10) comprend deux ou plus de deux stockages tampon raccordés en parallèle à chaque ligne de transfert, chaque stockage tampon (9, 10) étant raccordé à chaque ligne de transfert via une vanne (11, 12) d'isolation respective.

6. Dispositif selon l'une quelconque des revendications 1 à 5, **caractérisé en ce que** le circuit (3) de transfert comprend une conduite (17) de raccordement reliant les deux lignes de transfert au niveau des sorties des deux pompes (5), ladite conduite (17) de raccordement comprenant une vanne (18) d'isolation.

7. Dispositif selon l'une quelconque des revendications 1 à 6, **caractérisé en ce que** les deux lignes de transfert comprennent au moins une portion (19) isolée thermiquement.

8. Dispositif selon l'une quelconque des revendications 1 à 7, **caractérisé en ce que** les deux lignes de transfert comprennent au moins un capteur (20) de pression et/ou au moins un capteur (21) de température mesurant la pression, respectivement la température, notamment à proximité de l'extrémité aval (4).

9. Procédé de remplissage d'au moins un réservoir de gaz sous pression avec un débit de gaz déterminé à une température déterminée pour établir une rampe de remplissage déterminée dans le réservoir, dans lequel le procédé utilise un dispositif de remplissage conforme à l'une quelconque des revendications 1 à 8.

10. Procédé de remplissage selon la revendication 9, **caractérisé en ce que** le débit de gaz est variable et modifié au cours du temps.

11. Procédé de remplissage selon la revendication 9 ou 10, **caractérisé en ce que**, pendant au moins une partie du remplissage, notamment lorsque le débit de gaz déterminé est supérieur au débit maximal de la pompe (5), le débit de gaz transféré dans le réservoir est la somme d'une part du débit de gaz fourni par la pompe (5) et réparti entre l'organe (6) de vaporisation et la une branche (13) de dérivation, et, d'autre part, d'un débit de gaz additionnel fourni par l'ensemble de stockage(s) tampon (9, 10).

12. Procédé selon l'une que quelconque des revendication 9 à 11, **caractérisé en ce que**, pendant au moins une partie du remplissage, notamment lorsque le débit de gaz déterminé est inférieur ou égal au débit maximal de la pompe (5), le débit de gaz transféré dans le réservoir est constitué uniquement du débit de gaz fourni par la pompe (5) et réparti entre l'organe (6) de vaporisation et la une branche (13) de dérivation.

13. Procédé selon l'une que quelconque des revendication 9 à 12, **caractérisé en ce qu'**il comporte une étape de remplissage d'un réservoir avec un flux de gaz comprenant la somme des flux de gaz fournis par les pompes (5) de deux lignes de transfert via le transfert d'un flux de gaz d'une ligne de transfert dans l'autre ligne de transfert.

14. Procédé selon l'une que quelconque des revendication 9 à 13, **caractérisé en ce qu'**il comprend, préalablement ou au début du remplissage d'un réservoir (22), une étape de refroidissement de ladite ligne de transfert comprenant un transfert de gaz à une température déterminée contrôlée en pilotant la répartition relative entre le gaz relativement chaud passant par l'organe (6) de vaporisation et le gaz relativement froid passant par la branche (13) de dérivation et éventuellement la quantité de gaz relativement chaud provenant de l'ensemble de stockage(s) tampon (9, 10).

15. Procédé selon la revendication 14, **caractérisé en ce que** l'étape de refroidissement de ladite ligne de transfert est réalisée en contrôlant l'ouverture des vannes de répartition entre l'organe (6) de vaporisation et la branche (13) de dérivation et d'un éventuel débit de gaz additionnel fourni par l'ensemble de stockage(s) tampon (9, 10) selon un contrôle de type « boucle ouverte (« feedforward ») et/ou selon une boucle de contrôle basée sur une température mesurée au niveau de la ligne de transfert.

16. Procédé selon l'une que quelconque des revendication 14 ou 15, caractérisé en ce l'étape de refroidissement de ladite ligne de transfert comprend une étape de purge vers l'extérieur ou vers un organe de récupération du gaz transféré à une température déterminée contrôlée dans la ligne de transfert à refroidir.

## Patentansprüche

1. Vorrichtung zum Füllen von Druckgasbehältern, insbesondere von Wasserstoffdruckbehältern von Fahrzeugen, wobei die Vorrichtung eine Flüssiggasquelle (2) und einen Übertragungskreis (3), der zwei parallele Übertragungsleitungen umfasst, die jeweils ein mit der Flüssiggasquelle (2) verbundenes stromaufwärtiges Ende (3) aufweisen, umfasst, wobei jede Übertragungsleitung ein stromabwärtiges Ende (4) umfasst, das dazu bestimmt ist, lösbar an einen zu füllenden Behälter (22) angeschlossen zu werden, wobei jede der zwei Übertragungsleitungen umfasst: eine Pumpe (5), ein Organ (6) zur Verdampfung des gepumpten Fluids, einen Zweig (13) zur Umgehung des Verdampfungsorgans (6) und eine Verteilventilanordnung (7, 8), die dafür ausgelegt ist, den gepumpten und zwischen dem Verdampfungsorgan (6) und dem Umgehungszweig (13) aufgeteilten Fluidstrom zu steuern, wobei die Vorrichtung (1) außerdem eine Anordnung eines Pufferspeichers (von Pufferspeichern) (9, 10) umfasst, der (die) zu jeder der zwei Übertragungsleitungen über eine Ventilanordnung (11 bis 16) parallelgeschaltet ist (sind).

2. Vorrichtung nach Anspruch 1, **dadurch gekennzeichnet, dass** die Pufferspeicheranordnung (9, 10) an jede Übertragungsleitung zwischen dem Verdampfungsorgan (6) und dem Mischpunkt zwischen dem Fluid, welches durch das Verdampfungsorgan (6) geströmt ist, und dem Fluid, welches durch den Umgehungszweig (13) geströmt ist, angeschlossen ist.

3. Vorrichtung nach Anspruch 1 oder 2, **dadurch gekennzeichnet, dass** die Pufferspeicheranordnung (9, 10) an jede Übertragungsleitung über ein jeweiliges Druckminderventil (15, 16) angeschlossen ist.

4. Vorrichtung nach einem der Ansprüche 1 bis 3, **dadurch gekennzeichnet, dass** die Verteilventilanordnung (7, 8) jeder Übertragungsleitung ein erstes Verteilventil (7) umfasst, das sich stromabwärts des Verdampfungsorgans (6) und stromaufwärts des Mischpunktes mit dem Fluid, das durch den Umgehungszweig (13) geströmt ist, befindet, wobei die Verteilventilanordnung (7, 8) ein zweites Verteilventil (8) in dem Umgehungszweig (13) umfasst.

5. Vorrichtung nach einem der Ansprüche 1 bis 4, **dadurch gekennzeichnet, dass** die Pufferspeicheranordnung (9, 10) zwei oder mehr als zwei Pufferspeicher umfasst, die zu jeder Übertragungsleitung parallelgeschaltet sind, wobei jeder Pufferspeicher (9, 10) an jede Übertragungsleitung über ein jeweiliges Absperrventil (11, 12) angeschlossen ist.

6. Vorrichtung nach einem der Ansprüche 1 bis 5, **dadurch gekennzeichnet, dass** der Übertragungskreis (3) eine Anschlussleitung (17) umfasst, welche die zwei Übertragungsleitungen an den Ausgängen der zwei Pumpen (5) verbindet, wobei die Anschlussleitung (17) ein Absperrventil (18) umfasst.

7. Vorrichtung nach einem der Ansprüche 1 bis 6, **dadurch gekennzeichnet, dass** die zwei Übertragungsleitungen wenigstens einen thermisch isolierten Abschnitt (19) umfassen.

8. Vorrichtung nach einem der Ansprüche 1 bis 7, **dadurch gekennzeichnet, dass** die zwei Übertragungsleitungen wenigstens einen Drucksensor (20) und/oder wenigstens einen Temperatursensor (21) umfassen, welche den Druck bzw. die Temperatur messen, insbesondere in der Nähe des stromabwärtigen Endes (4).

9. Verfahren zum Füllen wenigstens eines Druckgasbehälters mit einem bestimmten Gasdurchsatz bei einer bestimmten Temperatur, um einen bestimmten Füllverlauf in dem Behälter zu bewirken, wobei bei dem Verfahren eine Vorrichtung zum Füllen gemäß einem der Ansprüche 1 bis 8 verwendet wird.

10. Verfahren zum Füllen nach Anspruch 9, **dadurch gekennzeichnet, dass** der Gasdurchsatz variabel ist und im Laufe der Zeit geändert wird.

11. Verfahren zum Füllen nach Anspruch 9 oder 10, **dadurch gekennzeichnet, dass** während wenigstens eines Teils des Füllvorgangs, insbesondere wenn der bestimmte Gasdurchsatz höher als die maximale Förderleistung der Pumpe (5) ist, der in den Behälter übertragene Gasdurchsatz die Summe ist von einerseits dem Gasdurchsatz, der von der Pumpe (5) geliefert und zwischen dem Verdampfungsorgan (6) und dem Umgehungszweig (13) aufgeteilt wird, und andererseits einem zusätzlichen Gasdurchsatz, der von der Pufferspeicheranordnung (9, 10) geliefert wird.

12. Verfahren nach einem der Ansprüche 9 bis 11, **dadurch gekennzeichnet, dass** während wenigstens eines Teils des Füllvorgangs, insbesondere wenn der bestimmte Gasdurchsatz kleiner oder gleich der maximalen Förderleistung der Pumpe (5) ist, der in den Behälter übertragene Gasdurchsatz nur aus dem Gasdurchsatz besteht, der von der Pumpe (5) geliefert und zwischen dem Verdampfungsorgan (6) und dem Umgehungszweig (13) aufgeteilt wird.

13. Verfahren nach einem der Ansprüche 9 bis 12, **dadurch gekennzeichnet, dass** es einen Schritt des Füllens eines Behälters mit einem Gasstrom, der die Summe der von den Pumpen (5) zweier Übertragungsleitungen gelieferten Gasströme umfasst, mittels der Übertragung eines Gasstroms von einer Übertragungsleitung in die andere Übertragungsleitung umfasst.

14. Verfahren nach einem der Ansprüche 9 bis 13, **dadurch gekennzeichnet, dass** es vor dem oder zum Beginn des Füllens eines Behälter4s (22) einen Schritt der Kühlung der Übertragungsleitung umfasst, der eine Übertragung von Gas mit einer bestimmten Temperatur umfasst, die gesteuert wird, indem die relative Aufteilung zwischen dem relativ warmen Gas, das durch das Verdampfungsorgan (6) strömt, und dem relativ kalten Gas, das durch den Umgehungszweig (13) strömt, und eventuell die Menge an relativ warmem Gas, das von der Pufferspeicheranordnung (9, 10) kommt, gesteuert werden.

15. Verfahren nach Anspruch 14, **dadurch gekennzeichnet, dass** der Schritt der Kühlung der Übertragungsleitung durchgeführt wird, indem das Öffnen der Verteilventile zwischen dem Verdampfungsorgan (6) und dem Umgehungszweig (13) und ein eventueller zusätzlicher Gasdurchsatz, der von der Pufferspeicheranordnung (9, 10) geliefert wird, gemäß einer Steuerung vom Typ "im offenen Regelkreis" ("Feedforward") gesteuert werden, und/oder gemäß einer Regelschleife, die auf einer an der Übertragungsleitung gemessenen Temperatur basiert.

16. Verfahren nach einem der Ansprüche 14 oder 15, **dadurch gekennzeichnet, dass** der Schritt der Kühlung der Übertragungsleitung einen Schritt der Spülung nach außen oder zu einem Organ zur Aufnahme des übertragenen Gases mit einer gesteuerten bestimmten Temperatur in der zu kühlenden Übertragungsleitung umfasst.

## Claims

1. Device for filling pressurized gas tanks, particularly vehicle pressurized hydrogen tanks, the device comprising a liquefied gas source (2), a transfer circuit (3) comprising two parallel transfer lines each having an upstream end (3) linked to the liquefied gas source (2), each transfer line comprising a downstream end (4) intended to be removably connected to a tank (22) to be filled, each of the two transfer lines comprising: a pump (5), a unit (6) for evaporating the pumped fluid, a branch (13) for bypassing the evaporating unit (6) and a distribution valve(s) (7, 8) set configured to control the flow of fluid pumped and distributed between the evaporating unit (6) and the bypass branch (13), the device (1) further comprising a buffer storage(s) (9, 10) set, which buffer storage(s) is(are) connected in parallel to each of the two transfer lines via a valve(s) (11-16) set.

2. Device according to Claim 1, **characterized in that** the buffer storage(s) (9, 10) set is connected to each transfer line between the evaporating unit (6) and the point of mixing between the fluid having passed through the evaporating unit (6) and the fluid having passed through the bypass branch (13).

3. Device according to Claim 1 or 2, **characterized in that** the buffer storage(s) (9, 10) set is connected to each transfer line via a respective expansion valve (15, 16) .

4. Device according to any one of Claims 1 to 3, **characterized in that** the distribution valve(s) (7, 8) set of each transfer line comprises a first distribution valve (7) located downstream of the evaporating unit (6) and upstream of the point of mixing with the fluid that has gone through the bypass branch (13), the distribution valve(s) (7, 8) set comprising a second distribution valve (8) in the bypass branch (13).

5. Device according to any one of Claims 1 to 4, **characterized in that** the buffer storage(s) (9, 10) set comprises two or more than two buffer storages connected in parallel to each transfer line, each buffer storage (9, 10) being connected to each transfer line via a respective isolation valve (11, 12).

6. Device according to any one of Claims 1 to 5, **characterized in that** the transfer circuit (3) comprises a connection duct (17) linking the two transfer lines at the outlets of the two pumps (5), said connection duct (17) comprising an isolation valve (18).

7. Device according to any one of Claims 1 to 6, **characterized in that** the two transfer lines comprise at least one thermally insulated portion (19).

8. Device according to any one of Claims 1 to 7, **characterized in that** the two transfer lines comprise at least one pressure sensor (20) and/or at least one temperature sensor (21) measuring the pressure and the temperature, respectively, particularly in proximity to the downstream end (4).

9. Method of filling at least one pressurized gas tank with a determined gas flow rate at a determined temperature to establish a filling determined gradient in the tank, in which the method uses a filling device in accordance with any one of Claims 1-8.

10. Filling method according to Claim 9, **characterized in that** the gas flow rate is variable and modified over time.

11. Filling method according to Claim 9 or 10, **characterized in that**, during at least part of the filling operation, particularly when the determined gas flow rate is greater than the maximum flow rate of the pump (5), the gas flow rate transferred into the tank is the sum, firstly, of the gas flow rate provided by the pump (5) and distributed between the evaporating unit (6) and the bypass branch (13), and, secondly, of an additional gas flow rate provided by the buffer storage(s) (9, 10) set.

12. Method according to any one of Claims 9 to 11, **characterized in that**, during at least part of the filling operation, particularly when the determined gas flow rate is less than or equal to the maximum flow rate of the pump (5), the gas flow rate transferred into the tank is solely formed from the gas flow rate provided by the pump (5) and distributed between the evaporating unit (6) and the bypass branch (13).

13. Method according to any one of Claims 9 to 12, **characterized in that** it includes a step of filling a tank with a gas flow comprising the sum of the gas flows provided by the pumps (5) of two transfer lines by transferring a gas flow from one transfer line into the other transfer line.

14. Method according to any one of Claims 9 to 13, **characterized in that** it comprises, prior to or when starting to fill a tank (22), a step of cooling said transfer line comprising a transfer of gas at a determined temperature controlled by managing the relative distribution between the relatively hot gas passing through the evaporating unit (6) and the relatively cold gas passing through the bypass branch (13) and possibly the quantity of relatively hot gas coming from the buffer storage(s) (9, 10) set.

15. Method according to Claim 14, **characterized in that** the step of cooling said transfer line is carried out by controlling the opening of the distribution valves between the evaporating unit (6) and the bypass branch (13) and a possible additional gas flow rate provided by the buffer storage(s) (9, 10) set according to an "open loop" ("feedforward") type control and/or according to a control loop based on a temperature measured at the transfer line.

16. Method according to either one of Claims 14 or 15, **characterized in that** the step of cooling said transfer line comprises a step of flushing toward the exterior or toward a unit for recovering the gas transferred at a determined temperature controlled in the transfer line to be cooled.
